# FASCICULE DE BREVET EUROPEEN

(11) **EP 3 259 830 B1**
(45) Date de publication et mention de la délivrance du brevet: **18.08.2021**
(21) Numéro de dépôt: 16707926.8
(22) Date de dépôt: 16.02.2016
(51) Int. Cl.: H02K 1/27, H02K 1/30, H02K 15/03

(54) **ROTOR DE MACHINE ÉLECTRIQUE TOURNANTE A AIMANTS PERMANENTS SEGMENTES**
ROTOR VON DREHENDER ELEKTRISCHER MASCHINE MIT PERMANENTMAGNETSEGMENTEN
ROTOR OF ROTARY ELECTRIC MACHINE WITH PERMANENT MAGNET SEGMENTS

(30) Priorité: 19.02.2015 FR 1551389
(43) Date de publication de la demande: 27.12.2017
(73) Titulaire: Valeo Equipements Electriques Moteur, 94046 Créteil Cedex (FR)
(72) Inventeur: BOUARROUDJ, Lilya, 94046 Creteil Cedex (FR); MATT, Jean-Claude, 94046 Creteil Cedex (FR)
(86) Numéro de dépôt international: PCT/FR2016/050353
(87) Numéro de publication internationale: WO 2016/132063

(56) Documents cités:
- EP-A2- 2 246 962
- WO-A1-2013/178942
- DE-A1-102008 018 724
- DE-A1-102010 064 259
- DE-A1-102011 084 292
- DE-A1-102012 202 529

## Description

L'invention porte sur un rotor de machine électrique à aimants permanents segmentés. L'invention trouve une application particulièrement avantageuse, mais non exclusive, avec les machines électriques réversibles de forte puissance pouvant fonctionner en mode alternateur et en mode moteur.

De façon connue en soi, les machines électriques tournantes comportent un stator et un rotor solidaire d'un arbre. Le rotor pourra être solidaire d'un arbre menant et/ou mené et pourra appartenir à une machine électrique tournante sous la forme d'un alternateur, d'un moteur électrique, ou d'une machine réversible pouvant fonctionner dans les deux modes.

Le stator est monté dans un carter configuré pour porter à rotation l'arbre par exemple par l'intermédiaire de roulements. Le rotor comporte un corps formé par un empilage de feuilles de tôles maintenues sous forme de paquet au moyen d'un système de fixation adapté, tel que des rivets traversant axialement le rotor de part en part. Le rotor comporte des pôles formés par exemple par des aimants permanents logés dans des encoches ménagées dans la masse magnétique du rotor.

Il a été observé que des zones de contraintes extrêmes apparaissent en périphérie externe du corps du rotor lors d'une rotation en survitesse, c'est-à-dire à une vitesse supérieure à 18000 tours/min. Ces zones de contraintes sont causées par les efforts centrifuges appliqués sur le corps du rotor par les aimants positionnés à l'intérieur des encoches, en particulier lorsque les aimants sont positionnés en déséquilibre du fait des jeux de montage.

On connait par ailleurs le document WO2013/111335 qui décrit un rotor ayant un corps comportant une plaque de renforcement radial s'étendant en travers des encoches destinées à recevoir les aimants. Une telle configuration présente l'inconvénient de réduire le volume d'aimants utilisé du fait de l'encombrement de la plaque, ce qui limite la puissance magnétique de la machine. En outre, le rotor nécessite la mise en œuvre d'un procédé complexe de fabrication faisant appel à des feuilles de tôles de plusieurs formes différentes. Le document EP2246962 décrit un moteur d'une machine électrique tournante selon le préambule de la revendication indépendante 1.

L'invention vise à remédier à tout ou partie des inconvénients précités en proposant un rotor de machine électrique tournante selon la revendication 1 comportant :
- un corps, et
- au moins une encoche ménagée dans ledit corps, ladite encoche étant traversante d'une face à l'autre dudit corps dudit rotor, au moins deux aimants permanents :
   insérés à l'intérieur de ladite encoche, desdits aimants permananents sont des aimants permanents parallélépipediques ayant deux angles biseautés à leur périphérie interne de manière à présenter une section réduite à l'une des extrémité desdits aimants permanentes, située du côté d'une axe dudit rotor et présentant une forme trapézoïdale.

Ainsi, du fait de l'insertion de deux aimants ou plus à l'intérieur d'une même encoche, l'invention permet de réduire la masse de chaque aimant et donc les efforts appliqués sur le corps du rotor par chaque aimant lors d'une phase de fonctionnement de la machine en survitesse. En outre, le fait que l'encoche soit traversante permet d'optimiser le volume d'aimants utilisé et donc les performances magnétiques de la machine électrique tout en facilitant le procédé de fabrication du rotor.

Selon l'invention revendiquée,
lesdits deux aimants permanents présentent des faces qui sont en regard l'une de l'autre.

Selon l'invention revendiquée,
lesdites faces en regard l'une de l'autre sont en contact l'une contre l'autre c'est-à-dire qu'aucune pièce n'est interposée entre ces deux faces.

Selon l'invention revendiquée,
lesdites faces en regard l'une de l'autre sont en contact suivant un plan perpendiculaire par rapport à un axe dudit rotor.

Selon l'invention revendiquée,
lesdites faces en regard l'une de l'autre sont séparées entre elles par une lame d'air.

Selon l'invention revendiquée,
ledit rotor comporte des lèvres de maintien radial desdits aimants permanents.

Selon l'invention revendiqueé,
lesdites lèvres de maintien s'étendent chacune depuis une extrémité d'un bras dudit rotor.

Selon un autre exemple de l'invention,
ledit rotor comporte au moins une plaquette positionnée entre lesdites lèvres de maintien et lesdits aimants permanents. Outre le maintien radial des aimants, la plaquette réalisée par exemple en plastique ou en matériau composite permet de faciliter l'insertion des aimants dans les encoches.

Selon un autre exemple de l'invention,
ledit rotor comporte une plaquette unique positionnée à l'intérieur de ladite encoche.

Selon un autre exemple de l'invention,
ladite plaquette s'étend sensiblement sur toute la longueur de ladite encoche.

Selon un autre exemple de l'invention,
ledit rotor comporte un nombre de plaquettes égal au nombre d'aimants permanents positionnés à l'intérieur de ladite encoche.

Selon un autre exemple de l'invention,
ledit rotor comporte au moins un ressort monté comprimé à l'intérieur de ladite encoche entre une âme centrale dudit rotor et lesdits aimants permanents.

Selon un autre exemple de l'invention,
ledit rotor comporte un ressort unique positionné à l'intérieur de ladite encoche.

Selon un autre exemple de l'invention,
ledit rotor comporte un nombre de ressorts égal au nombre d'aimants permanents à l'intérieur de ladite encoche.

Selon un autre exemple de l'invention,
lesdits aimants permanents sont réalisés en ferrite.

Selon un autre exemple de l'invention,
les aimants permanents sont à aimantation orthoradiale.

Selon un autre exemple de l'invention,
le rotor est un rotor à concentration de flux.

Selon un autre exemple de l'invention,
ledit corps dudit rotor est constitué par un paquet de tôles.

Selon un autre exemple de l'invention,
ledit rotor comporte des plaques de maintien positionnées de part et d'autre dudit rotor.

Selon un autre exemple de l'invention,
un circuit de refroidissement est apte à acheminer un liquide de refroidissement vers au moins une face d'extrémité axiale dudit rotor. Ce circuit pourra également être agencé pour permettre l'écoulement du liquide de refroidissement, par exemple de l'huile ou un mélange d'eau et d'antigel, entre le carter et le corps du stator,

Selon un autre exemple de l'invention, lesdites plaques de maintien comportent des pales de projection du liquide de refroidissement vers des chignons de bobinage du stator de la machine électrique.

L'invention a également pour objet une machine électrique tournante comportant un stator bobiné et un rotor tel précédemment défini.

L'invention a également pour objet une machine électrique tournante apte à tourner à une vitesse supérieure à 18000 tours/min comportant un stator bobiné et un rotor tel précédemment défini.

L'invention sera mieux comprise à la lecture de la description qui suit et à l'examen des figures qui l'accompagnent. Ces figures ne sont données qu'à titre illustratif mais nullement limitatif de l'invention.
La figure 1 montre une vue de dessus du rotor de machine électrique tournante selon la présente invention;
La figure 2 est une vue en perspective partielle du rotor de la figure 1 montré sans plaquette de retenue des aimants positionnée à l'intérieur de chaque encoche;
La figure 3 est une vue en perspective d'un ensemble d'aimants positionné à l'intérieur d'une même encoche du rotor de la figure 1 ;
La figure 4 montre une vue en perspective d'un ressort utilisé dans le rotor de la figure 1 ;

Les éléments identiques, similaires ou analogues conservent la même référence d'une figure à l'autre.

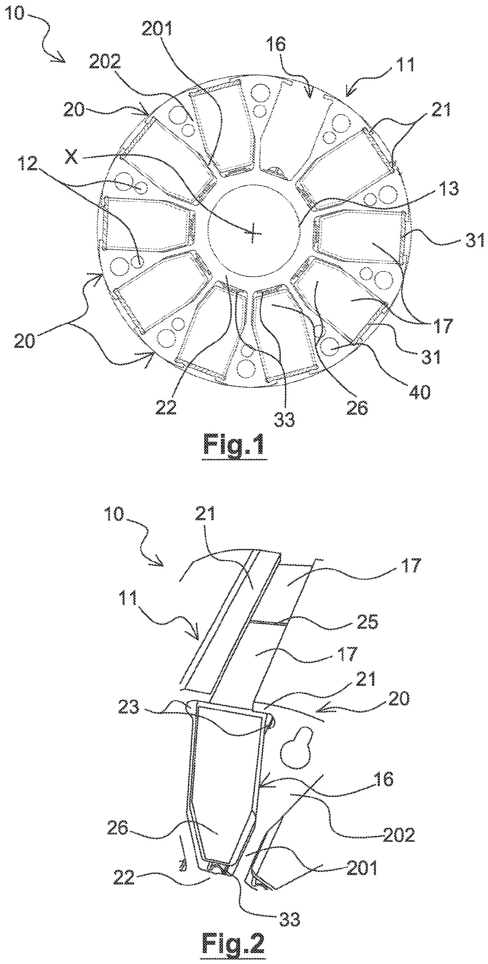

La figure 1 montre un rotor 10 selon l'invention d'axe X destiné à être monté sur un arbre (non représenté). Ce rotor 10 à aimants permanents appartient à une machine électrique tournante, telle qu'une machine électrique réversible de forte puissance pouvant fonctionner en mode alternateur et en mode moteur. En variante, cela pourra être un compresseur utilisé pour la compression de fluide réfrigérant de climatiseur de véhicule automobile. De manière connue, la machine électrique comporte un stator bobiné, qui pourra être polyphasé, entourant le rotor 10 avec présence d'un entrefer. Ce stator est porté par un carter configuré pour porter à rotation l'arbre via des roulements à billes et/ou à aiguilles.

Le rotor 10 est formé par un empilement de tôles s'étendant dans un plan radial perpendiculaire à l'axe X afin de diminuer les courants de Foucault. Cet empilement de tôles constitue un paquet de tôles formant le corps 11 du rotor 10 réalisé en matière ferromagnétique. Les tôles sont maintenues au moyen de rivets 12 traversant axialement de part en part l'empilement des tôles via des ouvertures (non référencés) pour formation d'un ensemble manipulable et transportable. Le corps 11 peut être lié en rotation à l'arbre de la machine électrique tournante de différentes manières, par exemple par emmanchement en force de l'arbre cannelé à l'intérieur de l'ouverture centrale 13 du rotor 10, ou à l'aide d'un dispositif à clavette.

Le rotor 10 comporte des encoches 16 destinées à recevoir des aimants permanents 17. Chaque encoche 16 traverse le corps 11 d'une face d'extrémité axiale à l'autre. En l'occurrence, les encoches 16 sont délimitées chacune par deux bras 20 adjacents issus d'une âme centrale 22 du rotor 10. Afin d'assurer une retenue radiale des aimants 17 dans les encoches 16, les bras 20 comportent chacun à leur extrémité libre deux lèvres de maintien 21 s'étendant circonférentiellement de part et d'autre des bras 20.

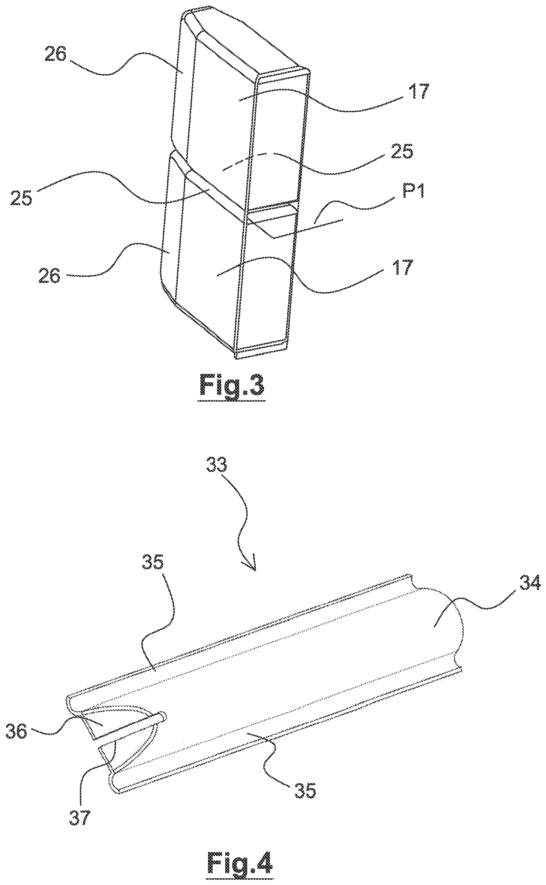

En l'occurrence, comme cela est bien visible sur les figures 2 et 3, deux aimants permanents 17 sont insérés à l'intérieur de chaque encoche 16. Ces deux aimants 17 présentent des faces 25 qui sont en regard l'une de l'autre, c'est-à-dire qu'aucune pièce n'est interposée entre ces deux faces 25.

Les faces 25 des deux aimants 17 pourront être en contact l'une contre l'autre suivant un plan P1 sensiblement perpendiculaire par rapport à l'axe X du rotor 10. Les faces 25 en regard l'une de l'autre des deux aimants 17 pourront toutefois être séparées entre elles par une lame d'air correspondant au jeu de montage des aimants 17 à l'intérieur des encoches 16. En variante, on prévoit dans chaque encoche 16 un empilement axial de trois aimants 17 ou plus.

Dans le cas présent, les aimants 17 ont une forme parallélépipédique ayant deux angles biseautés à leur périphérie interne. Les aimants 17 présentent ainsi une section réduite à une de leurs extrémités, de telle façon que cette extrémité référencée 26 présente une forme trapézoïdale. L'extrémité trapézoïdale 26 des aimants 17 est située du côté de l'axe X du rotor 10.

Afin que les encoches 16 présentent une forme complémentaire des aimants 17, chaque bras 20 comporte une première portion 201, globalement de largeur constante, issue de l'âme 22 prolongée par une deuxième portion 202 s'évasant en direction opposée à l'axe X et terminée par les lèvres de maintien 21. Un évidement longitudinal 23 est réalisé au niveau de la jonction entre chaque lèvre de maintien 21 et le bras 20 correspondant. En variante, les aimants 17 pourront présenter une forme parallélépipédique simple.

Les aimants 17 sont de préférence réalisés en ferrite. En variante, ils pourront toutefois être réalisés en terre rare selon les applications et la puissance recherchée de la machine électrique tournante. En variante, les aimants 17 peuvent être de nuance différente pour réduire les coûts. Par exemple, dans chaque ensemble, on associe un aimant 17 en ferrite et un aimant 17 en terre rare plus puissant mais plus coûteux. Certaines encoches 16 pourront également être laissées vides en fonction de la puissance recherchée de la machine électrique. Par exemple, deux encoches 16 diamétralement opposés peuvent être vides. Le rotor 10 est à concentration de flux, c'est-à-dire que les faces latérales en vis-à-vis des aimants 17 situés dans deux encoches 16 consécutives sont de même polarité.

Dans le mode de réalisation représenté, le rotor 10 comprend pour chaque encoche 16 une plaquette 31 unique bien visible sur la figure 1, dite laminette, réalisée en un matériau plus souple que les aimants 17. Chaque plaquette 31 est positionnée entre les lèvres de maintien 21 et les aimants 17 d'une encoche 16 correspondante, en s'engageant dans les évidements 23.

La plaquette 31 s'étend sensiblement sur toute la longueur de l'encoche 16. De préférence, la plaquette 31 est plate rectangulaire et a les mêmes dimensions et la même forme que la face externe de l'aimant 17 qu'elle recouvre avec ses bords en coïncidence. Les plaquettes 31 sont par exemple réalisées en matériau plastique ou composite.

Outre le maintien radial des aimants 17, les plaquettes 31 permettent de faciliter l'insertion des aimants 17 dans les encoches 16 qui est effectuée en faisant coulisser les aimants 17 parallèlement à l'axe X du rotor 10 de manière à obtenir un empilement axial d'aimants 17.

Alternativement, le rotor 10 comporte, dans chaque encoche 16, un nombre de plaquettes 31 égal au nombre d'aimants permanents 17 positionnés à l'intérieur de l'encoche 16. En variante, le nombre de plaquettes 31 dans une encoche 16 pourrait même être supérieur au nombre d'aimants 17 correspondants.

Pour assurer un maintien des aimants 17 à l'intérieur de leur encoche 16 contre les lèvres de maintien 21 via les plaquettes 31, le rotor 10 comporte, dans chaque encoche 16, un ressort 33 unique monté comprimé à l'intérieur de l'encoche 16 entre l'âme 22 du rotor 10 et les aimants permanents 17 (cf. figures 1 et 2). Chaque ressort 33 exerce ainsi par déformation un effort radial sur les aimants 17 de l'intérieur vers l'extérieur du rotor 10. Le fond de l'encoche 16 constitué par la face de l'âme 22 s'étendant entre deux bras 20 successifs présente de préférence une forme plate pour faciliter l'appui des ressorts 33 contre le fond.

Comme cela est bien visible sur la figure 4, chaque ressort 33, réalisé par exemple en acier inoxydable, comporte une portion arrondie centrale 34, et deux portions arrondies d'extrémité 35 situées de part et d'autre de la portion arrondie centrale. La portion arrondie centrale 34 et les portions arrondies d'extrémité 35 présentent des courbures inversées. Le rayon de courbure de la portion centrale 34 est supérieur au rayon de courbure des portions d'extrémité 35. Ce ressort 33 rattrape ainsi les jeux de sorte que les tolérances de fabrication peuvent être grandes. Chaque ressort 33 présente de préférence une extrémité biseautée 36 pour faciliter l'insertion des aimants 17 dans l'encoche 16. Chaque ressort 33 comporte en outre une fente 37 le long de l'extrémité biseautée pour réduire la rigidité de l'extrémité biseautée.

Alternativement, le rotor 10 comporte, dans chaque encoche 16, un nombre de ressorts 33 égal au nombre d'aimants permanents 17 positionnés à l'intérieur de l'encoche 16. En variante, le nombre de ressort 33 dans une encoche 16 pourrait même être supérieur au nombre d'aimants 17 correspondants

Le corps 11 du rotor 10 comporte également des ouvertures 40 montrées sur la figure 1 pour recevoir des tirants d'assemblage de deux plaques de maintien plaquées de part et d'autre du rotor 10 sur ses faces d'extrémité axiale. Ces plaques de maintien assurent une retenue des aimants 17 à l'intérieur des encoches 16 et peuvent être utilisés pour assurer un équilibrage du rotor 10. Les flasques sont en matière amagnétique, par exemple en aluminium.

Dans un exemple de réalisation, la machine électrique comporte un circuit de refroidissement agencé pour permettre l'écoulement d'un liquide de refroidissement, par exemple de l'huile ou un mélange d'eau et d'antigel, entre le carter et le corps du stator. Ce circuit de refroidissement est également configuré pour acheminer le liquide de refroidissement vers au moins une face d'extrémité axiale du rotor. Dans ce cas, les plaques de maintien pourront également comporter des pales de projection du liquide de refroidissement arrivant sur les faces d'extrémité du rotor. Les pales de projection sont configurées pour projeter, par centrifugation, le liquide de refroidissement vers des chignons du stator de la machine.

Pour plus de précisions sur la configuration des pales de projection, on pourra se référer à la demande française n° 1551381 déposée le 19 février 2015 par la Demanderesse.

On décrit ci-après le procédé de fabrication du rotor 10 de machine électrique tournante qui comprend une étape d'agencement du corps 11 formé par un paquet de tôles ayant au moins une encoche 16. Au moins un ressort 33 est inséré dans l'encoche 16 contre une face de l'encoche 16 située ici du côté de l'axe X du rotor 10. Au moins une plaquette 31 est insérée contre une face de l'encoche 16 située du côté opposé à la face contre laquelle est positionné le ressort 33. Au moins deux aimants permanents 17 sont insérés à l'intérieur de l'encoche 16. Des plaques de maintien sont ensuite fixées contre des faces latérales du corps 11 du rotor 10.

## Revendications

1. Rotor (10) de machine électrique tournante comportant :
- un corps (11), et
- au moins une encoche (16) ménagée dans ledit corps (11), ladite encoche (16) étant traversante d'une face à l'autre dudit corps (11) dudit rotor (10), et au moins deux aimants permanents (17) insérés à l'intérieur de ladite encoche (16), lesdits aimants permanents (17) étant des aimants permanents parallélépipediques (17) ayant deux angles biseautés à leur périphérie interne de manière à présenter une section réduite à l'une des extrémités (26) desdits aimants permanents (17) située du côté d'un axe (X) dudit rotor (10), les aimants permanents (17) présentant une forme trapézoïdale, les deux aimants permanents (17) présentant des faces (25) qui sont en regard l'une de l'autre, lesdites faces (25) en regard l'une de l'autre sont en contact l'une contre l'autre c'est-à-dire qu'aucune pièce n'est interposée entre ces deux faces (25),
lesdites faces (25) en regard l'une de l'autre sont en contact suivant un plan perpendiculaire par rapport à un axe dudit rotor (10),
le corps (11) comprend une pluralité d'encoches (16), les encoches (16) étant délimitées chacune par deux bras (20) adjacents issus d'une âme centrale (22) du rotor (10), les bras (20) comportant chacun une extrémité libre, les bras (20) comportant chacun à leur extrémité libre deux lèvres de maintien (21) s'étendant circonférentiellement de part et d'autre des bras (20),
lesdites lèvres de maintien (21) étant agencées pour permettre une retenue radiale desdits aimants permanents (17) dans les encoches (16).

2. Rotor selon la revendication précédente, **caractérisé en ce que** lesdites lèvres de maintien (21) s'étendent chacune depuis une extrémité d'un bras (20) dudit rotor (10).

3. Rotor selon l'une des revendications précédentes, **caractérisé en ce que** ledit rotor (10) comporte au moins une plaquette (31) positionnée entre lesdites lèvres de maintien (21) et lesdits aimants permanents (17).

4. Rotor selon la revendication précédente, **caractérisé en ce que** ledit rotor (10) comporte une plaquette (31) unique positionnée à l'intérieur de ladite encoche (16).

5. Rotor selon la revendication 3 ou 4, **caractérisé en ce que** ladite plaquette (31) s'étend sensiblement sur toute la longueur de ladite encoche (16).

6. Rotor selon l'une quelconque des revendications précédentes, **caractérisé en ce que** ledit rotor (10) comporte au moins un ressort (33) monté comprimé à l'intérieur de ladite encoche (16) entre une âme centrale (22) dudit rotor (10) et lesdits aimants permanents (17).

7. Rotor selon la revendication précédente, **caractérisé en ce que** ledit rotor (10) comporte un ressort (33) unique positionné à l'intérieur de ladite encoche (16).

8. Machine électrique tournante apte à tourner à une vitesse supérieure à 18000 tours/min, comportant un stator bobiné et un rotor (10) tel que défini selon l'une quelconque des revendications précédentes.

## Patentansprüche

1. Rotor (10) einer rotierenden elektrischen Maschine, welcher aufweist:
- einen Körper (11) und
- wenigstens eine Aussparung (16), die in dem Körper (11) ausgebildet ist, wobei die Aussparung (16) von einer Seite des Körpers (11) des Rotors (10) zur anderen durchgehend ist, und wenigstens zwei Permanentmagnete (17), die ins Innere der Aussparung (16) eingesetzt sind, wobei die Permanentmagnete (17) quaderförmige Permanentmagnete (17) sind, die an ihrem inneren Umfang zwei abgeschrägte Ecken aufweisen, so dass sie an dem einem der Enden (26) der Permanentmagnete (17), das sich auf der Seite einer Achse (X) des Rotors (10) befindet, einen reduzierten Querschnitt aufweisen, wobei die Permanentmagnete (17) eine trapezförmige Gestalt aufweisen, wobei die zwei Permanentmagnete (17) Stirnseiten (25) aufweisen, welche einander gegenüberliegen, wobei sich die einander gegenüberliegenden Stirnseiten (25) in Kontakt miteinander befinden, das heißt, kein Teil zwischen diesen Stirnseiten (25) angeordnet ist,
wobei sich die einander gegenüberliegenden Stirnseiten (25) entlang einer Ebene in Kontakt befinden, die bezüglich der Achse des Rotors (10) senkrecht ist,
wobei der Körper (11) mehrere Aussparungen (16) umfasst, wobei die Aussparungen (16) jeweils von zwei benachbarten Armen (20) begrenzt werden, die von einem zentralen Kern (22) des Rotors (10) ausgehen, wobei die Arme (20) jeweils eine freie Ende aufweisen, wobei die Arme (20) jeweils an ihrem freien Ende zwei Haltelippen (21) aufweisen, die sich beiderseits der Arme (20) in Umfangsrichtung erstrecken,
wobei die Haltelippen (21) dafür eingerichtet sind, ein radiales Festhalten der Permanentmagnete (17) in den Aussparungen (16) zu ermöglichen.

2. Rotor nach dem vorhergehenden Anspruch, **dadurch gekennzeichnet, dass** sich die Haltelippen (21) jeweils von einem Ende eines Armes (20) des Rotors (10) aus erstrecken.

3. Rotor nach einem der vorhergehenden Ansprüche, **dadurch gekennzeichnet, dass** der Rotor (10) wenigstens ein Plättchen (31) aufweist, das zwischen den Haltelippen (21) und den Permanentmagneten (17) positioniert ist.

4. Rotor nach dem vorhergehenden Anspruch, **dadurch gekennzeichnet, dass** der Rotor (10) ein einziges Plättchen (31) aufweist, das im Inneren der Aussparung (16) positioniert ist.

5. Rotor nach Anspruch 3 oder 4, **dadurch gekennzeichnet, dass** sich das Plättchen (31) im Wesentlichen über die gesamte Länge der Aussparung (16) erstreckt.

6. Rotor nach einem der vorhergehenden Ansprüche, **dadurch gekennzeichnet, dass** der Rotor (10) wenigstens eine Feder (33) aufweist, die zusammengedrückt im Inneren der Aussparung (16) zwischen einem zentralen Kern (22) des Rotors (10) und den Permanentmagneten (17) angebracht ist.

7. Rotor nach dem vorhergehenden Anspruch, **dadurch gekennzeichnet, dass** der Rotor (10) eine einzige Feder (33) aufweist, die im Inneren der Aussparung (16) positioniert ist.

8. Rotierende elektrische Maschine, die in der Lage ist, mit einer Drehzahl von mehr als 18000 Umdrehungen/min zu rotieren, und einen gewickelten Stator und einen Rotor (10), wie gemäß einem der vorhergehenden Ansprüche definiert, aufweist.

## Claims

1. Rotor (10) for a rotating electric machine, having:
- a body (11), and
- at least one slot (16) formed in said body (11),
said slot (16) passing through one face to the other of said body (11) of said rotor (10), and at least two permanent magnets (17) inserted inside said slot (16), said permanent magnets (17) being parallelepipedal permanent magnets (17) having two bevelled angles at their inner periphery so as to have a reduced cross section at one of the ends (26) of said permanent magnets (17) that is located on the side of an axis (X) of said rotor (10), the permanent magnets (17) having a trapezoidal shape, the two permanent magnets (17) having faces (25) that face one another, said faces (25) facing one another are in contact against one another, that is to say that there is no part interposed between these two faces (25),
said faces (25) facing one another are in contact along a plane perpendicular with respect to an axis of said rotor (10),
the body (11) comprises a plurality of slots (16), the slots (16) each being defined by two adjacent arms (20) emanating from a central core (22) of the rotor (10), the arms (20) each having a free end, the arms (20) each having, at their free end, two holding lips (21) extending circumferentially on either side of the arms (20),
said holding lips (21) being designed to allow said permanent magnets (17) to be held radially in the slots (16) .

2. Rotor according to the preceding claim, **characterized in that** said holding lips (21) each extend from one end of an arm (20) of said rotor (10).

3. Rotor according to either of the preceding claims, **characterized in that** said rotor (10) has at least one plate (31) positioned between said holding lips (21) and said permanent magnets (17).

4. Rotor according to the preceding claim, **characterized in that** said rotor (10) has a single plate (31) positioned inside said slot (16).

5. Rotor according to Claim 3 or 4, **characterized in that** said plate (31) extends substantially over the entire length of said slot (16).

6. Rotor according to any one of the preceding claims, **characterized in that** said rotor (10) has at least one spring (33) mounted so as to be compressed inside said slot (16) between a central core (22) of said rotor (10) and said permanent magnets (17).

7. Rotor according to the preceding claim, **characterized in that** said rotor (10) has a single spring (33) positioned inside said slot (16).

8. Rotating electric machine able to rotate at a speed greater than 18000 revolutions/minute, having a wound stator and a rotor (10) as defined in any one of the preceding claims.
